# EUROPEAN PATENT APPLICATION

(11) **EP 1 447 812 A1**
(43) Date of publication of application: **18.08.2004**
(21) Application number: 03002989.6
(22) Date of filing: 11.02.2003
(51) Int. Cl.: G11C 16/10, H03K 21/40

(54) **A method and apparatus for recurrently incrementing a running indication of a datum relating to an amount of usage of an industrial product**

(71) Applicant: SIEMENS AKTIENGESELLSCHAFT, 80333 München (DE)
(72) Inventor: Vetterkind, Steffen, 64385 Reichelsheim (DE)

(57) **Abstract**

A method and apparatus for recurrently incrementing a running indication of a datum relating to an amount of usage of an industrial product

A method for storing a running indication of a datum that relates to an advancing amount of usage of an industrial product in a semiconductor memory applies the recurrently incrementing of said running indication upon detecting a particular amount of such usage, whilst guarding against unwarranted reprogramming of such semiconductor memory to a lower indication regarding a value of the datum.

In particular, the method uses the following steps:
providing a flash ROM for such semiconductor memory; representing each such subsequent value by setting at least one additional memory bit;
and allowing to read such flash ROM for assessing an actual amount of the past usage.

## Description

The invention relates to a method for storing a running indication of a datum that relates to an advancing amount of usage of an industrial product in a semiconductor memory through recurrently incrementing said datum upon detecting a particular amount of such usage, whilst guarding against unwarranted reprogramming of such memory to a lower datum value, as being recited in the preamble of Claim 1. Various durable consumer goods are marketed both in a first user market and also in a second-hand market. The second-hand price then is to a great extent determined by the amount usage that has actually taken place, and which usage therefore has traditionally been indicated by measuring time or distance during which the article has run or been in use. Reprogramming the memory to a lower value could therefore often generate an additional amount of revenue for a malevolent seller. Especially, the second-hand car market is notorious for such kind of widespread fraud.

Prior art has recognized the problem. In a motor vehicle, a so-called combi-instrument is often being used for measuring and indicating various dynamic data, such as velocity, time, number of revolutions per minute, and other. The amount of kilometers that have been covered is stored in a separate EEPROM memory in the combi instrument. In case the protection against manipulation should be higher than usual, a specially designed EEPROM module is used. Such EEPROM module part has specific storage cells, and furthermore peripheral logic that forbids both counting in a backward direction, and also the immediate reprogramming to a lower value than previously.

The present inventor has recognized that the above type of problem would warrant the use of simpler and yet secure operational facilities that were attainable through using a so-called flash-ROM.

In consequence, amongst other things, it is an object of the present invention to store the above advancing amount in a Flash-EEPROM.

Now therefore, according to one of its aspects, the invention is characterized by the following steps:
- providing a flash ROM for such semiconductor memory;
- representing each such subsequent value by setting at least one additional memory bit;
- and allowing to read such flash ROM for assessing an actual amount of said past usage.

Preferably, the invention is being characterized in that the bits used for storing such running indication are dispersed as a minority amongst other storage bits that apply to using for implementing a ROM functionality.

According to another aspect, the invention is being characterized in that such amount of usage is governed by a predetermined progress of time.
A method according to the invention for use with a mechanized facility is being characterized in that such amount of usage is governed by a predetermined amount of mechanical motion.

The invention also relates to an apparatus being arranged for implementing the method as claimed in Claim 1, such apparatus in particular comprising a flash-ROM.

Said flash ROM memory preferably represents a parallel measuring facility to a standard accessable measuring facility for detecting said advancing amount of usage.

Such apparatus may be representing a single-chip integrated microcontroller.

The invention furthermore relates to a motor vehicle comprising such apparatus containing a flash-ROM and being arranged for implementing the above method according to the invention.

These and further features, aspects and advantages of the invention will be discussed more in detail hereinafter with reference to the disclosure of preferred embodiments of the invention, and in particular with reference to the appended Figures that illustrate:
- Figure 1: a memory layout for use with the invention;
- Figure 2: a flow chart of a method embodiment of the invention;
- Figure 3: a simple arrangement of such combi instrument;
- Figure 4: an arrangement of a microcontroller and flash memory.

First, various inconveniences with the prior art will be considered briefly as contrasting with the advantages of the present invention. So, even whilst using the prior art EEPROM facilities referred supra, it would be feasible, and possibly, quite cost-effective, to mount a new such module, because such EEPROM modules are used in appreciable volume, have a low price, and furthermore, feature only a limited number of interconnections or terminals to their environment. On the other hand, the storing of the datum in the Microcontroller proper would then require to exchange a part with some hundred terminals. Moreover, such Microcontroller part is commercially only available in a "raw" version, and must therefore be programmed with the complete, and generally, proprietary ROM-microcode.

Furthermore, the present invention does not require the extra costs of an additional hardware part that prior art would need for enhanced security, in that the Flash ROM were embodied within the microcontroller itself. As an additional feature, the present invention can provide the proposed counter in parallel with the "normal" kilometers counter for improving the possibility for checking on unauthorized manipulations.

Flash-ROM can be programmed or encoded once. Subsequent erasing thereof will put all individual bits to logic 1, just as is the case with all other kinds of erasing. Thereafter, encoding would be feasible again. In contrast, the programming is executed by setting selected bits to zero, in accordance with the content to be programmed, and may regard ROM-code or data. The resetting of the programmed bit back to 1 can only be performed by erasing relatively large memory areas. It is possible to implement incrementing counters in such storage modules, in that each further counting step sets at least one further bit at zero. Such storage arrangements may even be introduced as an integrated ROM in microcontrollers, such as internally in Combi-Instruments.

Advantageously, counters implemented in such manner cannot be erased or reset without destroying further data, in this case the microcontroller ROM code. Thereby, a very great amount of protection is produced against manipulation of data such as the amount of kilometers driven. In fact, an attempt to manipulate the kilometer data will also destroy at the same time an important amount of other data such as ROM code. Thereby, the microcontroller is rendered unusable until renewed programming of the ROM code, probably in an external programming machine. The amount of effort necessary for such programming is markedly higher than the replacing of the EEPROM module(s) referred to earlier.

A disadvantage of such incremental programming is the relatively small number of counting steps, that may probably be in the order of 1000. The reason is that according to the present invention, the counting range varies linearly with the counter's bit size. With a classical counter, the counter's bit size is generally proportional to the logarithm of the counting range. The disadvantage is not too serious, because usually, the amount of usage need not to be given with great accuracy. In case of motor vehicles, the gratest useful range may be about 1,000,000 kilometers. An accuracy of 1,000 kilometers would then be enough for all practical purposes. Many applications could then do with an accuracy of 5,000 or even 10,000 kilometers, so that even a few hundred bits would generally suffice. For measuring the amount of usage in the temporal domain, the age of a motor vehicle could be measured in months or in two-weeks'periods, and a range of 1000 bits would appear to represent quite a large range.

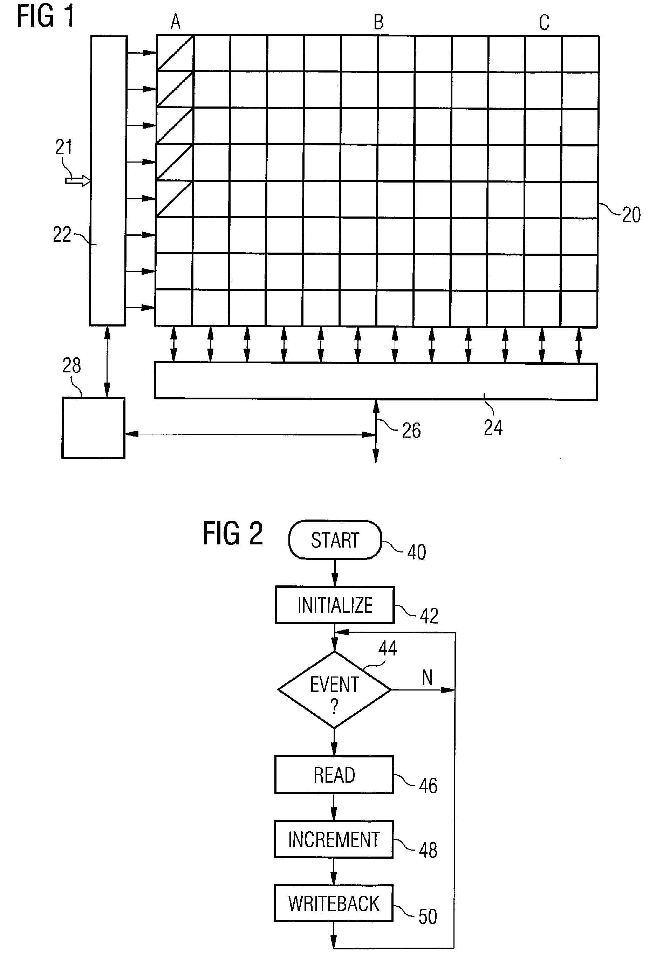

Figure 1 illustrates a memory layout for use with the invention. The cell structure of such flash ROM has not been detailed, inasmuch such would be known to persons skilled in the art of manufacturing flash-ROMs. Now, the cells are arranged in a two-dimensional matrix 20, here consisting of 8 rows by 12 columns. In practice, the size would be much greater. Now, each row has columns A and C devoted to cells for storing the running datum according to the present invention. The remaining cells C, some 83 %, are used for storing other data that preferably for a greater part have ROM functionality, such as regarding control code. In principle, other write-once data could be stored therein. Accessing of the matrix is by address register 22, data register 24, and applicable sync, R/W control and strobe signals as applicable, but not shown for brevity. Controller 28 knows where the last bit regarding the running datum has been written according to the invention. This controller cannot be accessed from outside the circuit. The address can thereby be produced either by controller 28, or rather, for accessing the remaining microcontroller code, by line 21. The data readout appears in register 24, either for external control use on line 26, or for amending of one A or C column bit by controller 28. Connected with such amending, the address stored in controller 28 is incremented. When the last bit of column A has been written, the amending thereupon will go to column C. More complicated arrangements regarding the positioning of the storage bits like those in columns A and C are feasible as well.

Erasing the flash-ROM is done in generally larger memory areas at a time, such as a whole module like that shown in Figure 1. As has been said earlier, when a larger number of bits is necessary for indicating the amount of use, such as the number of 1000 cited above, this will also command the erasing and reprogramming of a larger array, thereby also increasing the effort for reprogramming the other bits, such as those located in part B. The relatively smaller number of bits that indicate the amount of usage are interspersed among a relatively larger number of other bits. The minority bits may represent some 15% as shown in Figure 1, but larger fractions, such as 25%, or rather (much) smaller fractions, such as 5%, 1%, or even less could be applicable in certain cases. The interspersing could be according to separate columns as indicated in Figure 1, or rather in various other geometries

Figure 2 illustrates a flow chart of a method embodiment of the invention. In block 40, the system is started, and the necessary hardware and software facilities are assigned if necessary. In block 42 the system is initialized. In block 44, the system detects occurrence of an event, such as the passage of a predetermined amount of time, or the attaining of a particular amount of mechanical motion difference, such as distance covered or revolutions counted. If no detection, the block in question operates as a waiting loop. In case of occurrence of the detection, in block 46, the row (in Figure 1) is read out, the appropriate bit is written (block 48), and the row is written back (block 45). Thereupon, the system reverts to block 44.

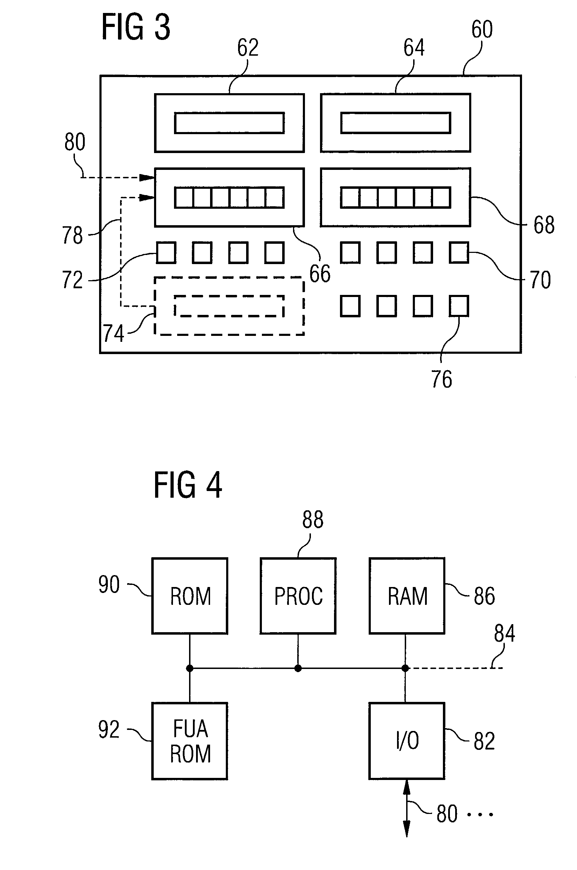

Figure 3 illustrates a simple arrangement of the combi instrument. The instrument has various visual indicators, such as 62 for the actual speed, 64 for the number of engine revolutions per minute, 66 for the total number of kilometers driven, and 68 for the number of kilometers driven after a particular reset, such as the day's total. The latter two indicators each have a sequence of counter numerals. Items 70, 72, and 76 represent various indicators for warning lights, lighting indicators, and the like. By themselves, the visual instruments shown may be realized by state of the art technology. Indicator 66 has no standard reset facility. The data to be displayed may be produced by recurrently reading from the appropriate bits of the memory shown in Figure 1, but such has not been separately shown in Figure 3. Another realization would be to provide a parallel measuring facility such as 74, that would by itself reproduce the data stored in the memory of Figure 1, and to provide an additional control facility like interconnection 80, for therewith controlling the display of the relevant data on element 66, through data interconnection 78. Regarding the driver or standard user, item 74 would then represent a "hidden" facility, that were only readable through specific access, such as through use of a specific confidential code only known to the manufacturer of the vehicle in question. Even manipulating of the standard distance covered as normally indicated on indicator 66 could then be defeated in a confidential procedure. The confidential code could be valid only for a limited time interval, such as one month, and could be communicated to an official agent of the manufacturer by Internet or another protected procedure.

Figure 4 illustrates an arrangement of a microcontroller and flash memory. The processor 88 is linked to various other subsystems through internal bus facility 84. Further subsystems are data RAM 86, ROM 90, FLASH-ROM 92, and I/O facility 82. One of the external connections to I/O facility 82 is interconnection 80 shown in figure 3. For brevity, no further I/O interconnection, such as to control and feed the various indicators of Figure 3 has been shown. The whole of Figure 4 could collectively represent an integrated microcontroller on a chip.

Now, the present invention has hereabove been disclosed with reference to preferred embodiments thereof. Persons skilled in the art will recognize that numerous modifications and changes may be made thereto without exceeding the scope of the appended Claims. In consequence, the embodiments should be considered as being illustrative, and no restriction should be construed from those embodiments, other than as have been recited in het Claims.

## Claims

1. A method for storing a running indication of a datum that relates to an advancing amount of usage of an industrial product in a semiconductor memory through recurrently incrementing said running indication upon detecting a particular amount of such usage, whilst guarding against unwarranted reprogramming of such semiconductor memory to a lower indication regarding a value of said datum,
- said method being **characterized by** the following steps:
- providing a flash ROM for such semiconductor memory;
- representing each such subsequent value by setting at least one additional memory bit;
- and allowing to read such flash ROM for assessing an actual amount of said past usage.

2. A method as claimed in Claim 1, being **characterized in that** the bits used for storing such running indication are dispersed as a minority amongst other storage bits that apply to using for implementing a ROM functionality.

3. A method as claimed in Claim 1, being **characterized in that** such amount of usage is governed by a predetermined progress of time.

4. A method as claimed in Claim 1, for use with a mechanized facility, being **characterized in that** such amount of usage is governed by a predetermined amount of mechanical motion.

5. A method as claimed in Claims 3 or 4, for use with a motor vehicle.

6. An apparatus comprising a flash-ROM and being arranged for implementing a method as claimed in Claim 1.

7. An apparatus as claimed in Claim 6, being **characterized in that** such flash ROM memory represents a parallel measuring facility to a standard accessable measuring facility for detecting such advancing amount of usage.

8. An apparatus as claimed in Claim 7, and representing a single-chip integrated microcontroller.

9. A motor vehicle comprising a device containing a flash-ROM and being arranged for implementing a method as claimed in Claim 4.
